# EUROPEAN PATENT SPECIFICATION

(11) **EP 1 644 621 B1**
(45) Date of publication and mention of the grant of the patent: **12.08.2009**
(21) Application number: 04748992.7
(22) Date of filing: 15.06.2004
(51) Int. Cl.: F01N 7/00, F01N 3/24

(54) **LOCKING DEVICE FOR THE MOUNTING OF AT LEAST ONE EXHAUST CLEANING COMPONENT IN AN EXHAUST PASSAGE**
VERRIEGELUNGSVORRICHTUNG ZUR BEFESTIGUNG MINDESTENS EINER ABGASREINIGUNGSKOMPONENTE IN EINEM ABGASKANAL
DISPOSITIF DE BLOCAGE PERMETTANT LE MONTAGE D'AU MOINS UN COMPOSANT EPURATEUR DES GAZ D'ECHAPPEMENT DANS UN PASSAGE D'ECHAPPEMENT

(30) Priority: 26.06.2003 SE 0301876
(43) Date of publication of application: 12.04.2006
(73) Proprietor: Scania CV AB (publ), 151 87 Södertälje (SE)
(72) Inventor: LINDEN, Michael, S-152 57 Södertälje (SE)
(86) International application number: PCT/SE2004/000934
(87) International publication number: WO 2004/113697

(56) References cited:
- FR-A1- 2 789 117
- GB-A- 364 015
- US-A1- 2002 134 074

## Description

### BACKGROUND TO THE INVENTION, AND STATE OF THE ART

The invention relates to a locking device for fitting at least one exhaust cleaning component in an exhaust passage according to the preamble of claim 1. (compare e.s. with GB-A-364015, US 2002/013407A) Ever higher requirements for reduced release of emissions from diesel-powered vehicles are successively being set. To be able to meet these emission requirements, exhaust systems of diesel engines are being equipped with catalytic cleaners which inter alia reduce the amount of nitrogen oxides, and with particle filters which reduce the amount of soot particles, in the exhaust gases.

The increasingly restrictive requirements concerning emissions of nitrogen oxides and soot particles will be introduced gradually while at the same time the acceptable emission levels for vehicles powered by combustion engines will clearly vary from country to country. In addition, the capacity of the exhaust-reducing components has to be adapted to the type and size of the combustion engine. This means that each individual vehicle has in principle to be provided with the exhaust system which comprises various combinations of exhaust cleaning components. One problem in this respect is that of fitting catalytic cleaners and particle filters of different sizes and in different combinations in a converter device in a simple and rational manner while at the same time meeting requirements with regard to such aspects as tightness, positioning and catering for thermal expansion.

### SUMMARY OF THE INVENTION

The object of the present invention is to provide a locking device which enables easy and reliable fitting of exhaust cleaning components of various sizes in such a way as to ensure good tightness and accurate positioning of the exhaust cleaning components while at the same time catering for their thermal expansion in a fitted state.

The object stated above is achieved with the device mentioned in the introduction which is characterised by what is indicated in the characterising part of claim 1. The first step when the locking device according to the present invention is to be used for fitting exhaust cleaning components adjacent to a tubular portion is to apply one of the exhaust cleaning components internally and/or externally about the tubular portion. This is followed by applying the locking body to the tubular portion by suitable fastening means. The construction of the means used for this purpose will with advantage be such as to result in rapid and sealing application of the locking body to the tubular portion. The locking device also comprises means which allow adjustable setting of the length of a spacing element which is adapted to occupying the axial distance between the locking body and the exhaust cleaning component. Said adjustable length of the spacing element makes it possible to fasten exhaust cleaning components of different sizes to the tubular portion by means of the locking device. Said spacing element also makes it possible to fasten exhaust cleaning components to the tubular portion easily and with a desired force.

According to a preferred embodiment of the present invention, the spacing element comprises a device in the form of a screw means which is fastened in the locking body by threads. Such a screw means makes it easy to adjust the axial distance between the locking body and the exhaust cleaning component by a screwing movement of the screw means. Such a screw means also makes it easy to achieve a desired clamping force between the locking body and the exhaust cleaning component so as to provide secure fastening of the exhaust cleaning component to the tubular portion. The screw means also makes it possible to alter the length of the spacing element so as to enable exhaust cleaning components of different sizes to be fitted. With advantage, the spacing element also comprises a device in the form of a spacing sleeve which is applicable between the locking body and the exhaust cleaning component. Spacing sleeves of the same diameter but of varying axial extent may be used for fastening exhaust cleaning components with different sizes of spacing element to the tubular portion.

According to another advantageous embodiment of the present invention, the locking body is adapted to being fastened, by said fastening means, to an end portion of the tubular portion. In this case, the locking body may be annular and extend round the end surface of the tubular portion in a fitted state. Said fastening means may comprise a radial fastening element which is connected to the locking body, and a recess in the tubular portion which is adapted to accommodating the radial fastening element in order to fasten the locking body to the tubular portion. Said recesses may have an aperture in the end surface of the tubular portion and be curved in shape so as to result substantially in a bayonet connection between the radial fastening element and the recess. The result is a very simple and reliable connection between the locking body and the tubular portion. To ensure a tight connection between the locking body and the tubular end-portion, the radial fastening elements may comprise screws which are screwed firmly into the recess.

According to another preferred embodiment of the invention, said spacing element is connected to the exhaust cleaning component via an elastic support element. Such a support element forms with advantage part of the exhaust cleaning component and extends round the periphery of the exhaust cleaning component. The elastic support element provides a good seal between the exhaust cleaning component and the tubular portion when the exhaust cleaning component is clamped firmly to the tubular component by the locking device. This means that no exhaust gases will make their way uncleaned past the exhaust cleaning component. The supporting element preferably has a contact surface with the spacing element which is so shaped as to result in centering of the exhaust cleaning component relative to the tubular portion in a fitted state. A support element which has a suitably sloping surface in contact with the spacing element results in successive centering of the exhaust cleaning component relative to the tubular portion when the length of the spacing element is adjusted by using said screw means. This also ensures that the exhaust cleaning component assumes a correct position in a fitted state.

According to another preferred embodiment of the invention, the locking body comprises an external portion situated radially externally about the tubular portion in a fitted state, whereby said spacing element has an extent between the external portion and an exhaust cleaning component which is arranged externally about the tubular portion. Such an external portion provides a suitable fastening region for a spacing element of variable length which has the purpose of fastening an annular exhaust cleaning component radially externally about the tubular portion. The locking body comprises with advantage an internal portion situated radially internally about the tubular portion in a fitted state, whereby said spacing element has an extent between said internal portion and an exhaust cleaning component which is arranged inside the tubular portion. Such an internal portion provides a suitable fastening region for a spacing element of varying length to make it possible to fit a cylindrically shaped exhaust cleaning component inside the tubular portion. The locking body comprises with advantage both such an internal portion and such an external portion. The locking body can thus effect fastening of both an exhaust cleaning component internally to the tubular portion and an exhaust cleaning component externally to the tubular portion. Separate internal and external spacing elements enable independent fitting of a first exhaust cleaning component externally to the tubular portion and a second exhaust cleaning component internally to the tubular portion. The locking device thus allows the fitting of substantially any desired combinations of exhaust cleaning components of different sizes.

According to another preferred embodiment of the present invention, the locking device, in a fitted state, is adapted to fastening the exhaust cleaning component by means of said spacing element to a stationary stop surface, situated adjacent to the tubular portion, via an elastic support element. The locking device thus enables secure fastening of the exhaust cleaning component with a desired force to said stationary stop surface. Said elastic support element provides relative to the stop surface a tight fastening so that there is no risk of exhaust gases making their way past the exhaust cleaning component. The support element has with advantage a sloping contact surface relative to the stop surface, resulting in centering of the exhaust cleaning component.

### BRIEF DESCRIPTION OF THE DRAWINGS

A preferred embodiment of the invention is described below by way of example with reference to the attached drawings, in which:
- Fig. 1: depicts a converter device which has a locking device according to the present invention,
- Fig. 2: depicts a section through the converter device in the plane A-A in Fig. 1,
- Fig. 3: depicts a perspective view of the module in Fig. 1,
- Fig. 4: depicts an upper fastening region of the locking device in Fig. 1 in more detail, and
- Fig. 5: depicts a perspective view of the locking device.

### DETAILED DESCRIPTION OF A PREFERRED EMBODIMENT OF THE INVENTION

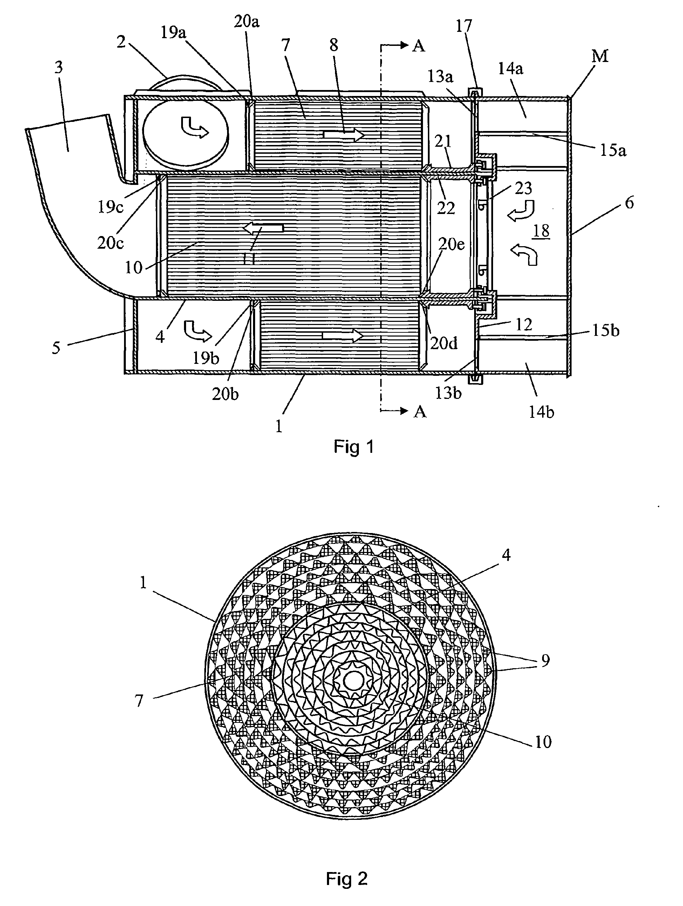

Fig. 1 depicts a converter device adapted to being arranged in an exhaust system for a diesel-powered vehicle. The converter device comprises an external casing 1 which has a substantially cylindrical shape. The casing 1 forms a closed external surface except at the points where an inlet 2 and an outlet 3 for exhaust gases are arranged. A pipe 4 with a circular cross-section is arranged inside the casing 1 in such a way that centrelines of the casing 1 and the pipe 4 substantially coincide. The length of the pipe 4 is such that it extends from a first endwall 5 of the converter to a module M. The module M comprises in a fitted state a second endwall 6 of the casing 1.

The converter device comprises exhaust cleaning components for cleaning exhaust gases which flow in a passage which extends between the inlet 2 and the outlet 3. A first exhaust cleaning component in the form of a particle filter 7 is arranged externally about the pipe 4. Fig. 2 depicts a section in a plane A-A through the particle filter 7.

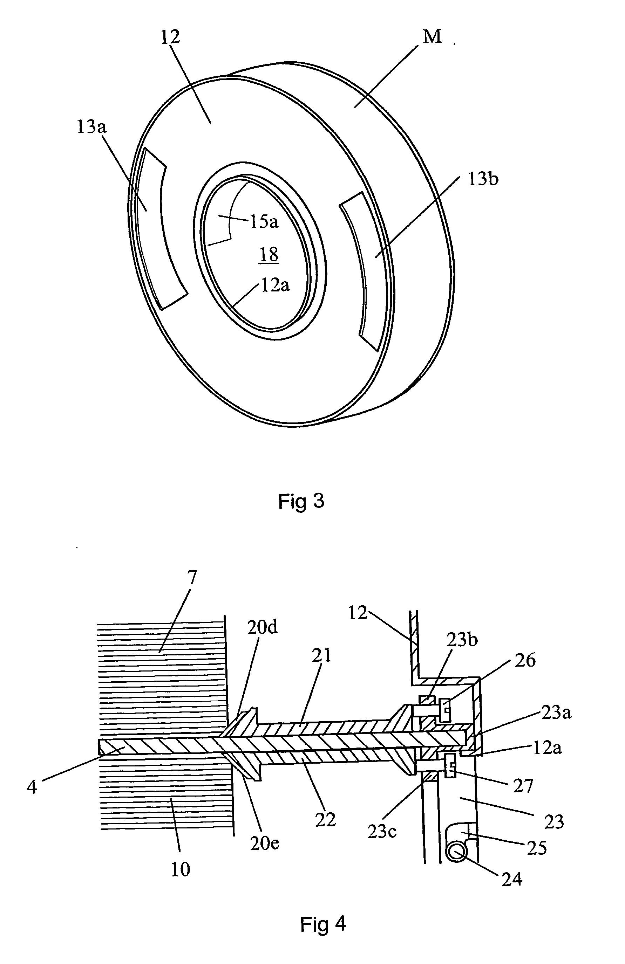

The particle filter 7 has an annular extent round the pipe 4. The particle filter 7 has a radial extent such that it completely fills the radial space between the pipe 4 and the casing 1. The particle filter 7 comprises elongate ducts adapted to leading exhausts gases through the particle filter in substantially a first direction 8. The particle filter 7 has a constant cross-sectional shape in the direct of flow of the exhaust gases. The particle filter 7 comprises stop surfaces 9 arranged at suitable points along the elongate ducts. The stop surfaces 9 cause the exhaust gases to be led into adjacent elongate ducts 9 in the particle filter. Soot particles in the exhaust gases are here intended to be caught and burned in the particle filter 7. A second exhaust cleaning component in the form of a catalytic cleaner 10 is arranged inside the pipe 4. The catalytic cleaner 10 is arranged radially internally about the particle filter 7. The catalytic cleaner 10 also comprises elongate ducts adapted to leading the exhaust gases in substantially a second direction 11 through the catalytic cleaner 10. The catalytic cleaner 10 has a substantially constant cross-sectional shape in the direction of flow 11 of the exhaust gases. The catalytic cleaner 10 is adapted to effecting catalytic cleaning of the exhaust gases, particularly in order to reduce the nitrogen oxides content of the exhaust gases as they pass through. The particle filter 7 has a larger cross-sectional surface than the catalytic cleaner 10 in the plane A which is depicted in Fig. 2. The result is that the exhaust gases have a lower velocity through the particle filter 7 than through the catalytic cleaner 10. The flow resistance to the exhaust gases is related to the flow velocity. Owing to the stop surfaces 9, the flow resistance to the exhaust gases is normally greater in the particle filter 7 than in the catalytic cleaner 10. The total flow resistance through the passage in the converter device can be considerably reduced by lowering the flow velocity through the particle filter 7. The cross-sectional area of the particle filter 7 is preferably about twice as great as that of the catalytic cleaner 10.
The exhaust gases flowing out from the particle filter 7 are led into the module M. The module M is depicted separately in Fig. 3. The module M comprises an inner wall surface 12. The wall surface 12 comprises apertures in the form of a first inlet 13a whereby the exhaust gases are led into a first spiral path 14a, and a second inlet 13b whereby the exhaust gases are led into a second spiral path 14b. The spiral paths 14a, b are formed by spiral profiles 15a, b. The module unit M thus comprises also the second endwall 6 and an outer radial region of the casing 1. The module unit M is fitted detachably to the remainder of the converter device, e.g. by clamping straps 17.. The inlets 13a, b of the two spiral paths are offset 180° from one another so that there is substantially even distribution of the exhaust gases between the two paths 14a, b. The exhaust gases led successively radially inwards through the spiral paths 14a, b travel a considerably longer distance than they would in a substantially rectilinear radial flow. The exhaust gases thus travel a long distance between two spaces in the converter device, resulting in good sonic damping properties. The spiral paths 14a, b change the direction of the exhaust gases in a relatively gentle manner resulting in relatively little flow resistance. The exhaust gases flowing out from the spiral paths 14a, b enter a space 18 situated centrally in the module M before being led into the pipe 4 towards the catalytic cleaner 10. When the exhaust gases reach the catalytic cleaner 10, they flow into the latter's elongate ducts which enable the exhaust gases to flow in the second flow direction 11 which is parallel with but in the opposite direction to the first flow direction 8. In the catalytic cleaner 10, the nitrogen oxides and ammonia content of the exhaust gases is reduced to nitrogen gas and water. The exhaust gases flowing out thereafter through the outlet 3 are substantially clear of soot particles and nitrogen oxides.

The converter device comprises an internal first annular stop element 19a which protrudes radially inwards from the casing 1 into the exhaust gas passage externally to the pipe 4. The particle filter 7 comprises an outer first support ring 20a arranged in contact with a side surface of the first stop element 19a. The first support ring 20a has a sloping surface adapted to being in contact with the annular first stop element 19a in a fitted state. A second annular stop element 19b arranged on an external surface of the pipe 4 protrudes into the exhaust passage externally to the pipe 4. The particle filter 7 comprises an inner second support ring 20b arranged against a side surface of the second stop element 19b. The second support ring 20b also has a sloping surface adapted to being in contact with the annular second stop element 19b in a fitted state. A third annular stop element 19c is arranged on an internal surface of the pipe 4. The catalytic cleaner 10 comprises at an end portion a third support ring 20c adapted to being in contact with a side surface of the third stop element 19c. The third support ring 20c has a sloping surface adapted to being in contact with the annular third stop element 19c in a fitted state. The particle filter 7 comprises at an opposite end-portion an internal fourth support ring 20d. The catalytic cleaner 10 comprises at an opposite end-portion a fifth support ring 20e. A first spacing sleeve 21 is arranged externally to the pipe 4, and a second spacing sleeve 22 is arranged internally to the pipe 4. The fourth support ring 20d has a sloping surface adapted to being in contact with the first spacing sleeve 21 in a fitted state. The fifth support ring 20e has a corresponding sloping surface adapted to being in contact with the second spacing sleeve 22 in a fitted state. A locking ring 23 is arranged at the free end of the pipe 4 to enable stable fitting of the particle filter 7 and the catalytic cleaner 10 in the converter device.

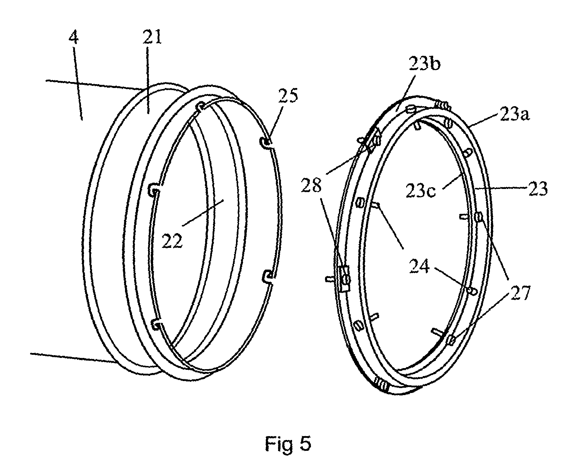

The locking ring 23 is depicted in more detail in Figs. 4 and 5. The locking ring 23 comprises a central portion 23a. The central portion 23a comprises a recess to accommodate an end portion of the pipe 4. The locking ring 23 comprises an external annular portion 23b situated radially externally about the central portion 23a, and an internal annular portion 23c situated radially internally about the central portion 23a. The central portion 23a of the locking ring 23 comprises a number of threaded holes with screw means 24 which have an extent in a substantially radial direction. The end portion of the pipe 4 comprises a number of curved recesses 25 to accommodate the screw means 24 in a fitted state. The external annular portion 23b comprises a number of threaded holes with screw means 26 which extend in a substantially axial direction. The outer free ends of the screw means 26 are adapted to allowing axial movement of the spacing sleeve 21 externally to the pipe 4. The internal annular portion 23c comprises a number of threaded holes with screw means 27 which extend in an axial direction. The free ends of the screw means 27 are adapted to allowing axial movement of the spacing sleeve 22 internally to the pipe 4. The wall surface 12 of the module M comprises an inner edge portion 12a with a substantially axial extent. The wall surface 12 extends in a fitted state, in a radially inner region, substantially round the locking ring 23. The edge portion 12a thus provides support for and sealing of the free end of the pipe 4 in a fitted state.

When a particle filter 7 and a catalytic cleaner 10 are to be fitted in the converter device, the particle filter 7 is initially inserted into the annular region external to the pipe 4 until the first support ring 20a comes into contact with the first stop element 19a and the second support ring 20b comes into contact with the second stop element 19b. The catalytic cleaner 10 is inserted into the pipe 4 until the third support ring 20c comes into contact with the third stop element 19c. The first spacing sleeve 21 is applied round the pipe 4 and the second spacing sleeve 22 inside the pipe 4.
Thereafter the locking ring 23 is fitted to the end portion of the pipe by introducing the radial screw means 24 into the curved recesses 25. The recesses 25 have a curved shape so that the radially protruding means 24 are initially inserted in the recesses in a substantially axial direction, followed by the locking ring 23 being turned until the radial screw means 24 reach an inner end location in the respective recesses 25. At the inner end location, each recess comprises threads. Each screw means 24 can thus be screwed firmly at that location into the respective recess 25, resulting in a secure and sealing connection between the central portion 23a of the locking ring and the end portion of the pipe 4.

To clamp the particle filter 7 with a desired force, the respective screw means 26 are screwed in to a suitable distance in the external annular portion 23b. The free ends of the screw means 26 thus move the spacing sleeve 21 and the particle filter 7 until a desired clamping force is achieved between the support rings 20a, 20b and the stop elements 19a, b at one end of the particle filter 7 and between the sleeve 21 and the fourth support ring 20d at the opposite end of the particle filter 7. In a fitted state, the elastic support rings 20a, b, d thus provide a seal between the particle filter 7 and adjacent sidewalls so that exhaust gases are effectively prevented from making their way past the particle filter 7. The support rings 20a, b, d have sloping contact surfaces which will automatically centre the particle filter 7 in a desired position when the screws 26 are screwed in. The elastic support rings 20a, b, d also have the ability to absorb mutual movements between components due to thermal expansion. The elasticity of the support rings 20a, b, d thus ensures good tightness of the particle filter 7 substantially regardless of temperature. To clamp the catalytic cleaner 10 with a desired force to the third stop element 19c, the respective screw means 27 are screwed in to a suitable distance in the threaded holes in the internal annular portion 23c. The free ends of the screw means 27 thus move the inner second spacing sleeve 22 and until the catalytic cleaner 10 is held by a suitable clamping force against the stop element 19c. The elastic support rings 20c, e of the catalytic cleaner 10 thus provide a seal between the catalytic cleaner 10 and adjacent sidewalls so that exhaust gases cannot make their way through the pipe 4 past the catalytic cleaner 10. The elastic support rings 20c, e also have sloping contact surfaces which will automatically centre the catalytic cleaner 10 in a desired position when the screws 27 are screwed in. The elastic support rings 20c, e also have the ability to absorb movements due to thermal expansion of the catalytic cleaner 10.

The locking device according to the invention makes it possible for particle filters 7 and catalytic cleaners 10 in the form of modules of different sizes to be fitted in the converter device. Such modules have a constant cross-sectional area but a variable axial length. No spacing sleeves 21, 22 need be used for large particle filters 7 and catalytic cleaners 10, as they can be clamped firmly simply by the axial screws 26, 27 as a result of the latter's free ends acting directly upon the support rings 20d, e of the particle filter 7 and the catalytic cleaner 10. Spacing sleeves 21, 22 of varying axial width may be used for different modules of particle filter 7 and catalytic cleaner 10 of different sizes. Particle filters 7 and catalytic cleaners 10 of different sizes may be used in substantially any desired mutual combination and be fitted to the end portion of the pipe 4 when the locking device comprises separate spacing elements 21, 22, 26, 27 for the particle filter 7 and the catalytic cleaner 10.

The invention is in no way limited to the embodiment described but may be varied freely within the scopes of the claims. For example, the catalytic cleaner may be arranged externally to the pipe and the particle filter be arranged internally to the pipe.

## Claims

1. A locking device for fitting at least one exhaust cleaning component (7,10) in an exhaust passage, **characterised in that** the locking device comprises a locking body (23), fastening means (24, 25) for fastening the locking body to a tubular portion (4) adjacent to the exhaust-guiding passage, and spacing elements (21, 22, 26, 27) which are adapted to extending between the locking body (23) and the exhaust cleaning component (7,10) in a fitted state, wherein said spacing elements (21, 22, 26, 27) comprise devices (26, 27) which enable adjustable setting of the length of the spacing element (21, 22, 26, 27) between the locking body (23) and the exhaust cleaning component (7, 10).

2. A locking device according to claim 1, **characterised in that** said spacing element comprises a device in the form of a screw means (26, 27) which is fastened in the locking body (23) by threads.

3. A locking device according to claim 1 or 2, **characterised in that** said spacing element comprises a device in the form of a spacing sleeve (21, 22) which is applicable between the locking body and the exhaust cleaning component (7, 10).

4. A locking device according to any one of the foregoing claims, **characterised in that** the locking body (23) is adapted to being fastened by said fastening means (24, 25) to an end portion of the tubular portion (4).

5. A locking device according to claim 4, **characterised in that** said fastening means comprises a radial fastening element (24) which is connected to the locking body (23), and a recess (25) in the tubular portion (4) which is adapted to accommodating the radial fastening element (24) in order to fasten the locking body (23) to the tubular portion (4).

6. A locking device according to any one of the foregoing claims, **characterised in that** said spacing element (21, 22,26,27) is connected to the exhaust cleaning component (7,10) via an elastic support element (20e, d).

7. A locking device according to claim 6, **characterised in that** the support element (20e, d) comprises a contact surface so shaped as to result in centering of the exhaust cleaning component (7, 10) relative to the tubular portion (4) in a fitted state.

8. A locking device according to any one of the foregoing claims, **characterised in that** the locking body (23) comprises an external portion (23b) which is situated radially externally about the tubular portion (4) in a fitted state, whereby said spacing element (21,26) has an extent between the external portion (23b) and an exhaust cleaning component (7) which is arranged externally about the tubular portion (4).

9. A locking device according to any one of the foregoing claims, **characterised in that** the locking body (23) comprises an internal portion (23c) which is situated radially internally about the tubular portion (4) in a fitted state, whereby said spacing element (22, 27) has an extent between said internal portion (23c) and an exhaust cleaning component (10) which is arranged inside the tubular portion (4).

10. A locking device according to any one of the foregoing claims, **characterised by** being adapted, in a fitted state, to fastening the exhaust cleaning component (7, 10) by means of said spacing element (21, 22, 26, 27) to a stationary stop surface (19a, b, c), which is situated adjacent to the tubular portion (4), via an elastic support element (20a, b, c).

## Patentansprüche

1. Verschlussvorrichtung zum Einsetzen wenigstens einer Abgasreinigungskomponente (7, 10) in eine Abgasleitung, **dadurch gekennzeichnet, dass** die Verschlussvorrichtung wenigstens einen Verschlusskörper (23), Befestigungsmittel (24, 25) zum Befestigen des Verschlusskörpers an einem rohrartigen Abschnitt (4) nahe der abgasführenden Leitung und Abstandselemente (21, 22, 26, 27) umfasst, die dazu ausgelegt sind, sich zwischen dem Verschlusskörper (23) und der Abgasreinigungskomponente (7, 10) in einem eingesetzten Zustand zu erstrecken, wobei die Abstandselemente (21, 22, 26, 27) Vorrichtungen (26, 27) umfassen, die eine einstellbare Festlegung der Länge der Abstandselemente (21, 22, 26, 27) zwischen dem Verschlusskörper (23) und der Abgasreinigungskomponente (7, 10) ermöglichen.

2. Verschlussvorrichtung nach Anspruch 1, **dadurch gekennzeichnet, dass** das Abstandselement eine Vorrichtung in Form eines Schraubenmittels (26, 27) umfasst, das in dem Verschlusskörper (23) mittels einem Gewinde festgelegt ist.

3. Verschlussvorrichtung nach Anspruch 1 oder 2, **dadurch gekennzeichnet, dass** das Abstandselement eine Vorrichtung in Form einer Abstandshülse (21, 22) umfasst, die zwischen dem Verschlusskörper und der Abgasreinigungskomponente (7, 10) einsetzbar ist.

4. Verschlussvorrichtung nach einem der vorangehenden Ansprüche, **dadurch gekennzeichnet, dass** der Verschlusskörper (23) dazu ausgelegt ist, durch die Befestigungselemente (24, 25) an einem Endabschnitt des rohrartigen Abschnitts (4) befestigt zu werden.

5. Verschlussvorrichtung nach Anspruch 4, **dadurch gekennzeichnet, dass** die Befestigungsmittel ein radiales Befestigungselement (24), das mit dem Verschlusskörper (23) verbunden ist, und eine Ausnehmung (25) in dem rohrartigen Abschnitt (4) umfassen, die dazu ausgebildet, um das radiale Befestigungselement (24) aufzunehmen, um den Verschlusskörper (23) am rohrartigen Abschnitt (4) zu befestigen.

6. Verschlussvorrichtung nach einem der vorangehenden Ansprüche, **dadurch gekennzeichnet, dass** das Abstandselement (21, 22, 26, 27) mit der Abgasreinigungskomponente (7, 10) über ein elastisches Stützelement (20e, d) verbunden ist.

7. Verschlussvorrichtung nach Anspruch 6, **dadurch gekennzeichnet, dass** das Stützelement (20e, d) eine Kontaktfläche umfasst, die derart geformt ist, dass sie zu einer Zentrierung der Abgasreinigungskomponente (7, 10) relativ zu dem rohrartigen Abschnitt (4) in einem eingesetzten Zustand führt.

8. Verschlussvorrichtung nach einem der vorangehenden Ansprüche, **dadurch gekennzeichnet, dass** der Verschlusskörper (23) einen äußeren Abschnitt (23b) umfasst, der radial außerhalb um den rohrförmigen Abschnitt (4) herum in einem eingesetzten Zustand angeordnet ist, wobei das Abstandselement (21, 26) sich zwischen dem äußeren Abschnitt (23b) und einer Abgasreinigungskomponente (7) erstreckt, die außerhalb um den rohrförmigen Abschnitt (4) herum angeordnet ist.

9. Verschlussvorrichtung nach einem der vorangehenden Ansprüche, **dadurch gekennzeichnet, dass** der Verschlusskörper (23) einen inneren Abschnitt (23c) umfasst, der in einem eingesetzten Zustand radial innerhalb des rohrförmigen Abschnitts (4) angeordnet ist, wobei das Abstandselement (22, 27) sich zwischen dem inneren Abschnitt (23c) und der Abgasreinigungskomponente (10) erstreckt, die innerhalb des rohrartigen Abschnitts (4) angeordnet ist.

10. Verschlussvorrichtung nach einem der vorangehenden Ansprüche, **gekennzeichnet dadurch, dass** sie in einem eingesetzten Zustand so ausgebildet ist, die Abgasreinigungskomponente (7, 10) mittels des Abstandselements (21, 22, 26, 27) über ein elastisches Stützelement (20a, b, c) an einer stationären Anschlagfläche (19a, b, c) zu befestigen, die benachbart dem rohrartigen Abschnitt (4) angeordnet ist.

## Revendications

1. Dispositif de blocage permettant le montage d'au moins un composant épurateur de gaz d'échappement (7, 10) dans un passage d'échappement, **caractérisé en ce que** le dispositif de blocage comprend un corps de blocage (23), des moyens de fixation (24, 25) pour fixer le corps de blocage à une partie tubulaire (4) adjacente au passage de guidage des gaz d'échappement, et des éléments d'espacement (21, 22, 26, 27) conçus pour s'étendre entre le corps de blocage (23) et le composant épurateur de gaz d'échappement (7, 10) à l'état monté, lesdits éléments d'espacement (21, 22, 26, 27) comprenant des dispositifs (26, 27) qui permettent de régler la longueur de l'élément d'espacement (21, 22, 26, 27) entre le corps de blocage (23) et le composant épurateur de gaz d'échappement (7, 10).

2. Dispositif de blocage selon la revendication 1, **caractérisé en ce que** ledit élément d'espacement comprend un dispositif ayant la forme d'un moyen en forme de vis (26, 27) qui est fixé par filetages dans le corps de blocage (23).

3. Dispositif de blocage selon la revendication 1 ou 2, **caractérisé en ce que** ledit élément d'espacement comprend un dispositif en forme de manchon-entretoise (21, 22) pouvant être disposée entre le corps de blocage et le composant épurateur de gaz d'échappement (7, 10).

4. Dispositif de blocage selon l'une quelconque des revendications précédentes, **caractérisé en ce que** le corps de blocage (23) est conçu pour être fixé par ledit moyen de fixation (24, 25) à une partie d'extrémité de la partie tubulaire (4).

5. Dispositif de blocage selon la revendication 4, **caractérisé en ce que** ledit moyen de fixation comprend un élément de fixation radial (24) raccordé au corps de blocage (23), et un évidement (25) dans la partie tubulaire (4), destiné à recevoir l'élément de fixation radial (24) de façon à fixer le corps de blocage (23) à la partie tubulaire (4).

6. Dispositif de blocage selon l'une quelconque des revendications précédentes, **caractérisé en ce que** ledit élément d'espacement (21, 22, 26, 27) est raccordé au composant épurateur de gaz d'échappement (7, 10) par l'intermédiaire d'un élément support élastique (20e, d).

7. Dispositif de blocage selon la revendication 6, **caractérisé en ce que** l'élément support (20e, d) comprend une surface de contact configurée de façon à permettre le centrage du composant épurateur de gaz d'échappement (7, 10) par rapport à la partie tubulaire (4) à l'état monté.

8. Dispositif de blocage selon l'une quelconque des revendications précédentes, **caractérisé en ce que** le corps de blocage (23) comprend une partie externe (23b) située radialement extérieurement autour de la partie tubulaire (4) à l'état monté, ledit élément d'espacement (21, 26) présentant ainsi une étendue, entre la partie externe (23b) et un composant épurateur de gaz d'échappement (7), qui est disposée extérieurement autour de la partie tubulaire (4).

9. Dispositif de blocage selon l'une quelconque des revendications précédentes, **caractérisé en ce que** le corps de blocage (23) comprend une partie interne (23c) située radialement intérieurement autour de la partie tubulaire (4) à l'état monté, ledit élément d'espacement (22, 27) présentant ainsi une extension, entre ladite partie interne (23c) et un composant épurateur de gaz d'échappement (10), qui est disposée à l'intérieur de la partie tubulaire (4).

10. Dispositif de blocage selon l'une quelconque des revendications précédentes, **caractérisé en ce qu'**il est destiné, à l'état monté, à fixer le composant épurateur de gaz d'échappement (7, 10) au moyen dudit élément d'espacement (21, 22, 26, 27) à une surface d'arrêt fixe (19a, b, c), située de manière adjacente à la partie tubulaire (4), par l'intermédiaire d'un élément support élastique (20a, b, c).
